# EUROPEAN PATENT SPECIFICATION

(11) **EP 3 675 995 B1**
(45) Date of publication and mention of the grant of the patent: **25.08.2021**
(21) Application number: 18789712.9
(22) Date of filing: 27.08.2018
(51) Int. Cl.: B01J 3/03, F16J 15/16

(54) **SEALING SYSTEM IN EXPLOSION PROOF DEVICES**
DICHTUNGSSYSTEM BEI EXPLOSIONSSICHEREN VORRICHTUNGEN
SYSTÈME D'ÉTANCHÉITÉ DANS DES DISPOSITIFS ANTI-EXPLOSION

(30) Priority: 30.08.2017 SI 201700247
(43) Date of publication of application: 08.07.2020
(73) Proprietor: Brinox, D.O.O., 1215 Medvode (SI)
(72) Inventor: BUH, Janez, 1355 Polhov Gradec (SI); BLAGOJEVIC, Marko, 1000 Ljubljana (SI)
(74) Representative: Pipan, Marjan
(86) International application number: PCT/SI2018/000019
(87) International publication number: WO 2019/045654

(56) References cited:
- EP-B1- 1 286 759
- FR-A1- 2 395 066
- US-A1- 2009 232 690

## Description

The present invention relates to a sealing system with an O-ring arranged in a compressed-air pressurized groove that provides for explosion proof sealing in explosion proof devices or devices resistant to explosion-related pressure surges. A seal that withstands explosion pressure and flame penetration can be designated as an explosion proof seal. The sealing of the invention is used in devices, in which parts of the device are frequently opened. The invention is preferably used in granulating and coating devices, in fluid bed dryers and in high shear mixers. The invention belongs to class B01J 3/03 of the International Patent Classification.

The technical problem which is successfully solved by the present invention is a construction-conditioned execution of sealing that provides for explosion proof sealing in explosion proof devices or devices resistant to explosion-related pressure surges.

The hitherto known types of sealing in the above-mentioned devices have been carried out by means of an inflatable seal, wherein compressed air was introduced into the interior of an inflatable seal (air hose). Typically, a seal is arranged in a groove of a first flange and presses with its free section on a flat surface of a second flange. In the event of an explosion within a device, the pressure and the flame escape outwards between the seal and the metallic flange and this can cause an explosion outside of the device if explosive atmosphere is present at that exact moment outside of the device.

It is evident from patent document EP 1 286 759 B1 that an inflation pressure of 3 to 15 bar is needed when using an inflatable seal with a hollow cross-section. Based on experience, the inflation pressure of a seal must be even somewhat higher than the explosion pressure. Such high pressures are problematic for the seals having a hollow cross-section (the seals tend to burst) and the force they cause is high, which calls for a stiffer construction of a carrier assembly of the device.

In a modified version of an inflatable seal having a hollow cross-section from patent document EP 2 016 315 B1, the inflation pressure is lower. Based on the description, the inflation pressure is in the range of one half of the explosion pressure. Moreover, the shape of the seal leads to a conclusion that the explosion pressure does not contribute to direct sealing as is the case with the seal which is the object of the present invention.

The sealing system in explosion proof devices of the invention with an O-ring arranged in a pressurized groove is carried out in a way that the O-ring arranged in the groove is acted upon by a pressure that is lower than the pressure in the inflatable seal in known variants. In the event of an explosion within a device, the explosion pressure presses the O-ring, such that it yet additionally seals the joint, thus the escape of the pressure and the flame between the seal and the flange is herewith prevented.

The invention will now be explained in more detail below by means of an embodiment with reference to the enclosed drawings, in which:
- Figure 1: shows a construction-related execution of sealing of a housing with an O-ring arranged in a pressurized groove;
- Figure 2: shows a schematic view of a detail of sealing of the housing with an O-ring arranged in a pressurized groove, in a sealing position;
- Figure 3: shows a schematic view of a detail of sealing of the housing with an O-ring arranged in a pressurized groove, in the event of an explosion within a container.

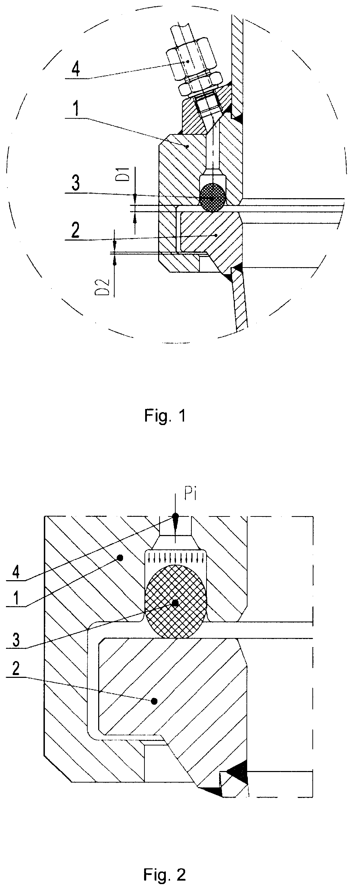

A construction-related execution of a system for sealing a housing with an O-ring arranged in a compressed-air pressurized groove of the invention is shown in Figure 1. A joint between parts of a container/device is formed by a C-shaped flange that is the most common and the most practical form of a flange joint for such devices. A top flange 1 encloses a bottom flange 2 and prevents opening in the event of an increased pressure within a container. Between the flanges 1, 2, there are a gap D1 from the top side and a gap D2 from the bottom side. The gaps D1, D2 depend on the size of the flange and are in a range 2 to 4 mm. They are provided to allow for unhindered opening of the flanges 1, 2 when the device is manipulated. The flanges 1 and 2 can also be reversed (the seal provides sealing upwards) or in a vertical position (the seal provides sealing towards a side).

An O-ring 3 is arranged in the rectangular groove in the top flange 1. In the sealing phase of the device, compressed-air pressure is supplied through a connection 4 that pushes the O-ring 3 against the bottom flange 2. Before the device is opened, negative pressure of approx. 0.8 barg is supplied to the connection 4 which draws the O-ring 3 into the groove thus releasing the flanges 1, 2 and the device can be opened.

Figure 2 shows the position of the O-ring 3 in a sealing position. The O-ring 3 is pressed against the bottom flange 2 under the influence of pressure Pi, thus providing sealing of the container. Under the influence of the force of the O-ring 3, the bottom flange 2 does not move to an end bottom position to abut upon the bottom edge of the top flange 1, because the force is too small and the carrying structure of the machine keeps the parts in a spaced-apart position (in order to allow for unhindered opening after the seal has been vented and vacuumized).

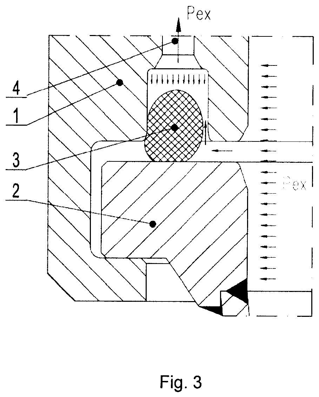

Figure 3 shows the position of the O-ring 3 immediately after an explosion within the device. The pressure within the container abruptly (approx. 1/100 of a second) increases to the explosion pressure that depends on the explosion atmosphere. In the present case, the explosion pressure Pex is 12 barg. The explosion pressure *Pex* presses the bottom flange 2 downwards to abut upon the edge of the top flange 1. Simultaneously, the explosion pressure Pex presses the O-ring 3 against the external edge of the groove and penetrates past the internal edge above the O-ring 3, thus yet additionally pressing the O-ring 3 against the external edge and additionally sealing the joint. The explosion pressure also penetrates into the system of compressed air supplied via the connection 4, this is why the pipeline must be made of metal and the system provided with a controlled non-return valve.

An explosion test revealed that the pressure Pi needed to press against the seal amounts to approx. 1/3 of the explosion pressure Pex. With the explosion pressure 12 barg and the safety factor 1.25, the pressure that presses against the O-ring 3 is 5 barg.

The O-ring 3 is made of a soft rubber having the hardness 45 to max. 55 ShA. The use of silicone rubber is recommended. If another sealing material is to be used, where the required low hardness cannot be achieved, the O-ring 3 may also be made of a hollow round profile. To improve the tribological properties of the seal it is recommended to use PTFE coated O-rings.

A diameter tolerance of the O-ring 3 must be within 0/+2%. The O-ring must be produced in a tool by a hot vulcanizing method.

Glued seals made of extruded profiles are inadequate for this application and should not be used.

The groove is of a rectangular shape and has the height that exceeds the nominal diameter of the cross-section of the O-ring 3 by 15-20%. The groove width is 4-6% smaller than the nominal diameter of the cross-section of the O-ring 3. The O-ring 3 has a circular cross-section with a diameter between 5 and 25 mm, which allows for easier cleaning in comparison with conventional inflatable seals that are usually of more sophisticated shapes provided with additional grooves and the like.

The advantages of the sealing system in explosion proof devices of the invention are particularly:
- the width (cross-section diameter) of the O-ring 3 can be considerably smaller than that of a known conventional inflatable seal having a hollow cross-section (air tube);
- no need to detect closeness of the flange joint of the container/device; with a conventional inflatable seal (air tube) there is a risk of the seal to burst if it is not inserted in the groove and closed by a counter flange, while in the sealing system of the invention the compressed air pressure pushes the seal out of the groove if the flange joint is not closed;
- no problems caused by the seal falling out, which is quite a problem of a conventional inflatable seal arranged in the top flange.

For safety reasons of operation in the environments at risk of explosion, the system of inflating the seal of the invention must be provided with a pressure sensor/pressure switch. If the inflation pressure is not reached, the seal does not provide for an explosion proof tightness. Reliability of the operation of the pressure detection system is typically in class SIL2.

The system of the invention was verified with explosion tests in a special chamber pressurized to 12 barg. Technical requirements and guidelines for the construction of said devices can be found in the EN 14460 standard.

## Claims

1. Sealing system in explosion proof devices,
**characterized in that**
an O-ring (3) is arranged in a rectangular groove of a top flange (1) and abuts upon a bottom flange (2), wherein the pressure of the O-ring (3) against the bottom flange (2) is provided for by a supply of compressed air pressure through a connection (4), when , in use, the pressure in a container abruptly increases,
the pressure presses the O-ring (3) towards the external edge of the groove and penetrates past the internal edge above the O-ring (3), thus yet additionally pressing the O-ring (3) against the external edge and additionally sealing the joint.

2. Sealing system in explosion proof devices according to claim 1,
**characterized in that**
the pressure that presses against the O-ring in the joint is at least 1/3 of the explosion pressure multiplied by a safety factor 1.25.

3. Sealing system in explosion proof devices according to claim 1 and 2,
**characterized in that**
the O-ring (3) has dimensions between 5 and 25 mm and is made from soft rubber, hardness 45 to max. 55 ShA, preferably a silicone rubber.

4. Sealing system in explosion proof devices according to claim 3,
**characterized in that**
the O-ring (3) is made of a hollow round profile in case low material hardness is not achievable.

5. Sealing system in explosion proof devices according to claims 1 to 3,
**characterized in that**
the groove has a rectangular shape and a height that exceeds the nominal diameter of the cross-section of the O-ring (3) by 15-20% and that the width of the groove is 4-6% smaller than the nominal diameter of the cross-section of the O-ring (3).

## Patentansprüche

1. Dichtungssystem in explosionssicheren Vorrichtungen,
**dadurch gekennzeichnet, dass**
ein O-Ring (3) in einer rechteckigen Nut eines Oberflansches (1) angeordnet ist und an einem Bodenflansch (2) anliegt, wobei der Druck des O-Rings (3) gegen den Bodenflansch (2) durch eine Druckluftzufuhr durch eine Verbindung (4) vorgesehen ist, wobei der Druck in einem Behälter bei Verwendung schlagartig zunimmt, der Druck den O-Ring (3) gegen den Aussenrand der Nut drückt und oberhalb des O-Rings (3) an der Innenkante durchdringt, wodurch der O-Ring (3) zusätzlich gegen den Aussenrand gedrückt wird und das Gelenk zusätzlich abgedichtet wird.

2. Dichtungssystem in explosionssicheren Vorrichtungen nach Anspruch 1,
**dadurch gekennzeichnet, dass**
der Druck, der gegen den O-Ring im Gelenk drückt, mindestens 1/3 des Explosionsdrucks multipliziert mit einem Sicherheitsfaktor 1,25 beträgt.

3. Dichtungssystem in explosionssicheren Vorrichtungen nach Anspruch 1 und 2,
**dadurch gekennzeichnet, dass**
der O-Ring Abmessungen zwischen 5 und 25 mm aufweist und aus Weichgummi, Härte 45 bis max 55 ShA, vorzugsweise aus einem Silikongummi, besteht.

4. Dichtungssystem in explosionssicheren Vorrichtungen nach Anspruch 3,
**dadurch gekennzeichnet, dass**
der O-Ring (3) aus einem hohlen Rundprofil gefertigt ist, falls eine geringe Materialhärte nicht erreichbar ist.

5. Dichtungssystem in explosionssicheren Vorrichtungen nach Ansprüchen 1 bis 3,
**dadurch gekennzeichnet, dass**
die Nut eine rechteckige Form und eine Höhe aufweist, die den Nenndurchmesser des Querschnitts des O-Rings (3) um 15-20% übersteigt und dass die Breite der Nut 4-6% kleiner ist als der Nenndurchmesser des Querschnitts des O-Rings (3).

## Revendications

1. Système d'étanchéité dans des dispositifs anti-explosion,
**caractérisé en ce que**
un joint torique (3) est disposé dans une rainure rectangulaire d'une bride supérieure (1) et vient en butée sur une bride inférieure (2), la pression du joint torique (3) contre la bride inférieure (2) étant fournie par une alimentation en pression d'air comprimé par l'intermédiaire d'une connexion (4), lorsque la pression dans un récipient augmente brusquement, la pression presse le joint torique (3) vers le bord externe de la rainure et pénètre au-delà du bord interne au-dessus du joint torique (3), ce qui permet en outre de presser le joint torique (3) contre le bord externe et d'assurer l'étanchéité supplémentaire du joint.

2. Système d'étanchéité dans des dispositifs anti-explosion selon la revendication 1,
**caractérisé en ce que**
la pression qui appuie contre le joint torique dans le joint est d'au moins 1/3 de la pression d'explosion multipliée par un facteur de sécurité 1,25.

3. Système d'étanchéité dans des dispositifs anti-explosion selon la revendication 1 et 2,
**caractérisé en ce que**
le joint torique (3) présente des dimensions comprises entre 5 et 25 mm et est constitué de caoutchouc mou, de dureté 45 à max 55 ShA, de préférence de caoutchouc de silicone.

4. Système d'étanchéité dans des dispositifs anti-explosion selon la revendication 3,
**caractérisé en ce que**
le joint torique (3) est constitué d'un profil rond creux dans le cas où une faible dureté de matériau n'est pas réalisable.

5. Système d'étanchéité dans des dispositifs anti-explosion selon les revendications 1 à 3,
**caractérisé en ce que**
la rainure a une forme rectangulaire et une hauteur qui dépasse le diamètre nominal de la section transversale du joint torique (3) de 15 à 20% et que la largeur de la rainure est de 4 à 6% plus petite que le diamètre nominal de la section transversale du joint torique (3).
